# EUROPÄISCHE PATENTSCHRIFT

(11) **EP 1 041 016 B1**
(45) Veröffentlichungstag und Bekanntmachung des Hinweises auf die Patenterteilung: **22.10.2003**
(21) Anmeldenummer: 00106191.0
(22) Anmeldetag: 22.03.2000
(51) Int. Cl.: B65F 1/14, B65F 1/16, B62B 1/26

(54) **Aufnahmeeinrichtung für verschmutzte Maschinenputztücher**
Containment device for contaminated wipes
Récipient destiné à recevoir des chiffons contaminés

(30) Priorität: 30.03.1999 DE 19914290
(43) Veröffentlichungstag der Anmeldung: 04.10.2000
(73) Patentinhaber: MEWA Textil-Service AG & Co Management oHG, 65189 Wiesbaden (DE)
(72) Erfinder: Wölfinger, Ursula, 65307 Bad Schwalbach (DE); Küttelwesch, Rudolf, 65527 Niederhausen (DE)
(74) Vertreter: Tergau & Pohl Patentanwälte

(56) Entgegenhaltungen:
- AU-B- 646 524
- DE-A- 4 220 231
- US-A- 5 354 023
- US-A- 5 641 171
- US-A- 6 039 200

## Beschreibung

Die Erfindung betrifft eine Aufnahmeeinrichtung für verschmutzte Maschinenputztücher oder dgl. mit einem einstückig aus Kunststoff gefertigten und mittels eines schwenkbar am Behälterrand angelenkten Deckels iuftdicht verschließbaren Transport- und Lagerbehälter, nachstehend kurz allgemein "Behälter" genannt. Benutzte, mit Öl, Lösemitteln oder dgl. befrachtete Maschinenputztücher sind Gefahrgut. Die zu ihrem Transport zur Wäscherei üblicherweise benutzten, wiederverwendbaren Behälter sind einstückig aus Kunststoff (hochmolekulares Niederdruckpolyethylen = HD-PE) gefertigt, weil solche Behälter ein geringes Eigengewicht aufweisen und über die lange Lebensdauer des wiederverwendbaren Behälters dicht bleiben, was bei z. B. aus Stahlblech gefertigten Behältern nicht gewährleistet ist. In vollbeladenem Zustand ist ein Gesamtgewicht bis 120 kg zulässig. Die Behälter sind daher auf ihrem Transportweg von einem Lagerstellplatz im Betrieb gefüllt mit verschmutzten Putztüchern zur Wäscherei und zurück gefüllt mit gewaschenen Tüchern stark und vielfältig beansprucht. Sie sind bekannt z.B. aus DE-U-86 09 586 oder DE-U-94 03 247. Zu ihrem besseren Handling sind sie ähnlich üblichen, aus Kunststoff gefertigten Hausabfalltonnen mit eigenen Transporträdern ausgestattet, auf denen sie in aus ihrer aufrechtstehenden Lagerposition leicht geneigtem Zustand nach Art etwa einer Sackkarre rollbar sind.

Von besonderer Wichtigkeit ist der bei den bekannten Behältern am Behälterrand schwenkbar angelenkte Verschlussdeckel. Aufgrund gesetzlicher Bestimmungen soll er im Hinblick auf die Gefährlichkeit des Transportgutes luftdicht verschließbar sein und - ausgenommen der Befüllungsvorgang mit gebrauchten und daher kontaminierten Tüchern - immer geschlossen gehalten werden.

Wegen der Gefährlichkeit der in gebrauchten Maschinenputztüchern gebundenen Schmutzbefrachtung und weil dadurch eine Gefahr zur Selbstentzündung besteht, müssen wegen der Brandgefahr diese Behälter immer luftdicht verschlossen sein. Daher dürfen sie nur von üblichen Arbeitsplätzen räumlich getrennt im Freien oder in Lagerräumen aufgestellt sein, wo ihr Verschlussdeckel lediglich zum Zweck einer chargenweisen Befüllung mit verschmutzten Tüchern geöffnet und anschließend wieder luftdicht verschlossen wird. Das geschieht in aller Regel dadurch, dass am einzelnen Arbeitsplatz ein gesonderter, wesentlich kleinerer, ebenfalls durch einen Deckel verschließbarer, vorwiegend aus Stahlblech bestehender Aufnahmebehälter für gebrauchte Maschinenputztücher benutzt wird, der dann zur Gänze in den Behälter entleert wird.

Die Benutzung von solchen kleineren, ebenfalls verschließbaren, für eine vereinzelte Aufstellung am Arbeitsplatz zugelassenen Aufnahmebehältern als Zwischenlagerungsbehältnis ist kostspielig, weil deren in kurzen Zeitabständen notwendige Entleerung in die großvolumigen, für den Weg zur und von der Wäscherei bestimmten Behälter wertvolle Personenzeit kostet. Außerdem können durch das Umfüllen zusätzliche Gefahren entstehen. Wie nämlich bereits eingangs erwähnt ist, zeichnen sich diese herkömmlichen Behälter durch ein großes Transportvolumen mit einer maximalen Befrachtungskapazität von ca. 120 kg aus, weil sie in erster Linie nach für die Lagerung und den Transport vom Benutzer zur Wäscherei und zurück gültigen Kriterien ausgebildet und ausgestattet sind. Diese Kriterien sind erleichtertes Handling, Brandsicherheit, raumsparende Transportfähigkeit auf Kraftfahrzeugen, Stapelbarkeit usw..

Der Erfindung liegt die Aufgabe zugrunde, eine Aufnahmeeinrichtung für verschmutzte Maschinenputztücher zu schaffen, die eine Benutzung der herkömmlichen Behälter auch bei Kontaminierung der Tücher mit Gefahrstoffen direkt am Arbeitsplatz ermöglicht bzw. behördlichen Sicherheitsvorschriften entsprechend zulässig macht, wo bisher nur gesonderte, ebenfalls verschließbare Aufnahmebehälter zur einzelnen Direktaufnahme und zur Zwischenlagerung von verschmutzten Maschinenputztüchern zulässig sind. Diese Aufgabe wird durch Anspruch 1 gelöst.

Von besonderer Bedeutung ist die gegen den permanenten Deckelschließdruck wirksame und durch Fußdruck betätigbare Hubeinrichtung am Aufnahmegestell, die das Hochschwenken des Verschlussdeckels des einstehenden Behälers bewerkstelligt. Dadurch ist nämlich außerhalb der nur durch Fußdruck aufrechterhaltenen Öffnungsstellung des Verschlussdeckels ein permanenter Behälterverschluss in einer Weise sichergestellt, die den Brandsicherheitsauflagen gerecht wird.

Der Erfindungsgegenstand und seine weitere Ausgestaltung werden im Einzelnen anhand der Figuren beispielsweise beschrieben. Es zeigen:
- Fig. 1: eine Seitenansicht der Aufnahmevorrichtung mit strichpunktiert dargestelltem Behälter.
- Fig. 2: eine Draufsicht in Blickrichtung II von Fig. 1 auf die Aufnahmeeinrichtung.
- Fig. 3: eine Seitenansicht der Aufnahmevorrichtung in Blickrichtung des Pfeiles III in Fig. 2.
- Fig. 4: eine perspektivische Gesamtansicht der Aufnahmeeinrichtung mit insbesondere - in durchgezogenen Linien dargestellt - dem Aufnahmegestell und - strichpunkiert dargestellt - dem Behälter.
- Fig. 5: eine weitere Darstellung analog Fig. 4 aus einer anderen Perspektive,
- Fig. 6: eine perspektivische Darstellung lediglich des Aufnahmegestells der Aufnahmeeinrichtung.
- Fig. 7: eine Seitenansicht des Aufnahmegestells,
- Fig. 8: eine Ansicht in Blickrichtung des Pfeiles VIII in Fig. 7,
- Fig. 9: eine Draufsicht auf das Aufnahmegestell in Pfeilrichtung IX von Fig. 8,
- Fig. 10: eine perspektivische Vorderansicht der Aufnahmevorrichtung mit der Schließstellung des Behälterdeckels entsprechend in etwa eine Horizontallage abgesenkter Schwenklasche analog den Fig. 6 bis 8,
- Fig. 11: eine perspektivische Rückansicht des Aufnahmegestells mit in eine Öffnungsstellung des nicht dargestellten Behälterdeckels hochgeschwenktem Öffnungshebel und daran angelenkter Schwenklasche, die zusätzlich ihrerseits hochgeschwenkt ist.

Die Aufnahmevorrichtung für verschmutzte Maschinenputztücher enthält als Kern einen herkömmlichen, mit einem schwenkbar am Behälterrand angelenkten Behälterdeckel 1 verschließbaren Behälter 2 gemäß dem eingangs genannten Stand der Technik und zu seiner Aufnahme ein insbesondere für sich rollbares Aufnahmegestell 3 für den Behälter 2. Das Aufnahmegestell 3 enthält nebeneinander zwei zueinander parallele, sich im Wesentlichen in vertikaler Richtung erstreckende Vertikalstreben 4,5, deren jede auch für sich allein als anspruchsgemäßes Stütz- oder Wandelement 6 wirksam sein kann. Die beiden Vertikalstreben 4,5 sind indessen an ihrem oberen und unteren Ende jeweils durch eine Horizontalstrebe 7 bzw. 8 miteinander verbunden und bilden dadurch gemeinsam einen rechteckförmigen, in Gebrauchsstellung aufrechtstehenden Rahmen, der in seiner Gesamtheit als Stütz- oder Wandelement 6 wirksam ist. Die Fläche bzw. Ebene des Stütz- oder Wandelements 6 erstreckt sich im Wesentlichen in vertikaler Richtung. In dieser Richtung verläuft in Zusammenbaustellung der gesamten Aufnahmeeinrichtung auch etwa die Mittellängsachse 9 des Behälters 2 und quer dazu, also etwa in Horizontalrichtung, die Schwenkachse 10 des Behälterdeckels 1, wenn der Behälter 2 sich in seiner Aufnahme- oder Fixierposition innerhalb des Aufnahmegestells 3 befindet.

Der Behälter 2 weist zur optimalen Raumnutzung der Ladefläche eines Lastkraftwagens oder eines anderweitigen Transportmittels im Wesentlichen eine Quadertorm mit etwa quadratischem Mantelquerschnitt auf, wobei die Ecken des Quadratquerschnittes großzügig ausgerundet sind. Die Deckelschwenkachse 10 verläuft dabei in Richtung einer Seite des besagten Quadratquerschnittes. Die Behälterform entspricht dem eingangs genannten Stand der Technik.

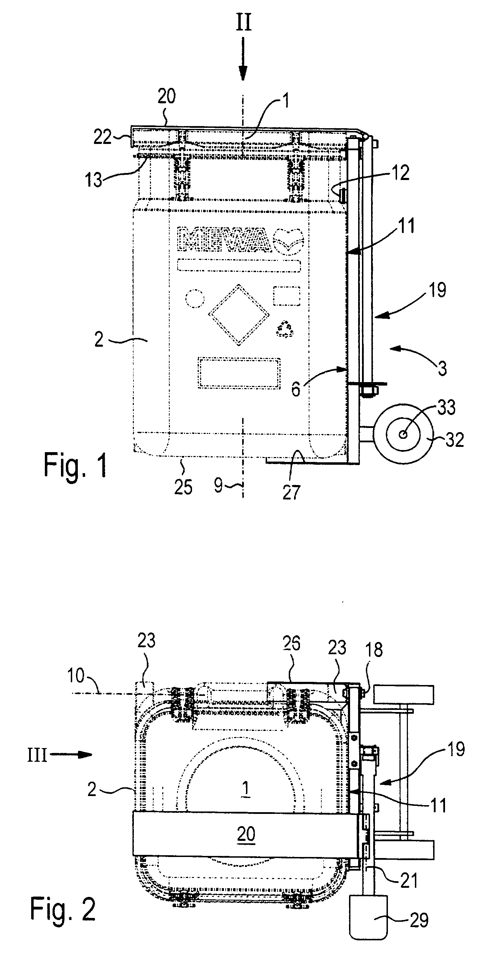

Der Behälter 2 ist innerhalb des Aufnahmegestells 3 in Anlage mit einer Behälterseitenwand 11 am Stütz- oder Wandelement 6 positioniert. Die Anlageseite bzw. die anliegende Behälterseitenwand 11 ist dabei in einem rechten Winkel zur Dekkelschwenkachse 10 positioniert und bildet somit diejenige Behälterflanke, die sich in Draufsicht gemäß Fig. 2 im Uhrzeigersinn an die der Deckelschwenkachse 10 zugeordnete und ihr entsprechend ausgerichtete Behälterseite anschließt (Fig. 2).

In seiner aus den Fig. 2 bis 5 ersichtlichen Aufnahme- und Anlagestellung am Aufnahmegestell 3 ist der Behälter 2 mittels eines Spann- und Zurrgurtes lösbar fixiert. Zu dessen Halterung trägt das Stütz- oder Wandelement 6 in seinem oberen Bereich eine etwa horizontal verlaufende Fixierstrebe 12. Sie bildet eine etwa horizontale Längsführung oder beidendige Halterung für einen Spann- oder Zurrgurt (nicht dargestellt), der in Fixierstellung den Mantel oder den Behälterhals 13 des Behälters 2 nach Art eines Fassreifens umschlingt. Die Fixierstrebe 12 trägt an ihrem der Scharnierseite (Deckelschwenkachse 10) des Behälters 2 zugewandten Ende einen etwa rechtwinklig abgewinkelten, in Richtung auf den Aufnahmeraum für den Behälter vorstehenden Anlageansatz 14. An den freien Enden von Fixierstrebe 12 und Anlageansatz 14 sind Ösen 15,16 zur Fixierung insbesondere der Enden eines zur Umreifung des Behälterhalses 13 bestimmten Zurrgurtes oder Zurrbandes vorgesehen. Der Anlageansatz 14 liegt in Fixierstellung am Mantel oder am Behälterhals 13 des Behälters 2 an und bildet dabei einen Positionierungsanschlag.

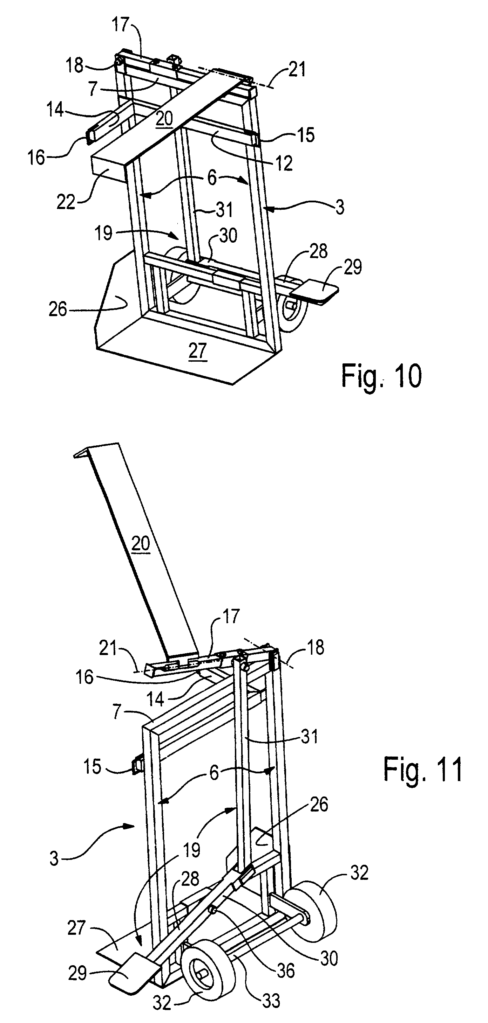

Weiterhin trägt die obere Horizontalstrebe 7 des Stütz- oder Wandetements 6 einen parallel zur oder in der Fläche bzw. Ebene des Stütz- oder Wandelements 6 hochschwenkbaren Schwenköffnungshebel 17, dessen Schwenkachse 18 in Aufnahmestellung des Behälters ( Fig. 1 bis 5) etwa koaxial zur Deckelschwenkachse 10 positioniert ist. Dieser Schwenköffnungshebel 17 ist durch eine nachstehend näher beschriebene, fußbetätigbare Hubeinrichtung 19 um einen Schwenkwinkel hochschwenkbar (Fig. 11) und mit dem Behälterdeckel 1 einfach verbindbar bzw. kuppelbar. Er schwenkt dabei den mit ihm verbundenen bzw. verkuppelten Behälterdeckel 1 um einen Winkelbereich hoch, welcher zum bequemen Einlegen von verschmutzten Putztüchern ausreicht. Dieser fußbetätigbare Schwenkwinkel muss nicht übermäßig groß dimensioniert sein. Die Erfindungsaufgabe ist darauf gerichtet, die Aufnahmeeinrichtung so auszugestalten, dass in ihr ein Behälter herkömmlicher Art unmittelbar am Arbeitsplatz aufgestellt und nur soweit wie für eine weitgehende vereinzelte Tuchaufnahme gerade notwendig kurzzeitig geöffnet werden kann.

Der Schwenköffnungshebel 17 ist zur Erzeugung eines in Fixierstellung auf den Behälterdeckel 1 einwirkenden Schließdruckes mit Abstand von seiner Schwenkachse 18 gewichtsbelastet. Dazu dient die Schwenklasche 20 als Schließbelastungsgewicht, welches um eine parallel zum Schwenköffnungshebel 17 verlaufende Achse 21 am Schwenköffnungshebel 17 hochschwenkbar (Fig. 11) gelagert ist. Der Schwenköffnungshebel 17 trägt an seinem Ende einen nach unten abgewinkelten Hubwinkel 22, mit welchem er den Behälterdeckel 1 umgreift und gleichzeitig gegenüber dem Schwenköffnungshebel 17 positioniert bzw. zentriert. Der Behälterdeckel 1 wird so in einer Weise fixiert, dass sich eine Hochschwenkbewegung des Schwenköffnungshebels 17 auf den Behälterdeckel 1 überträgt. Dieser wird um denselben Schwenkwinkel wie der Schwenköffnungshebel 17 hochgeschwenkt. Um das zu ermöglichen, ist die Aufnahme- bzw. die Fixierposition des Behälters 2 innerhalb des Aufnahmegestells 3 so dimensioniert bzw. abgestimmt, dass in Kombinationsstellung die Schwenkachsen 10,18 von Behälterdeckel 1 und Schwenköffnungshebel 17 etwa koaxial positioniert sind.

In aus den eingangs genannten Druckschriften bekannter Weise ist der Behälter 2 mittels Behälterrädern 23 für sich rollbeweglich. Die Behälterräder 23 sind mit ihren Rotations- bzw. Rollebenen in etwa den Ebenen zweier einander gegenüberliegender Seitenwände im Bodenbereich des Behälters positioniert. Die Behälterradachse 24 liegt dabei unterhalb der Deckelschwenkachse 10 im Bereich des Behälterbodens 25 des Behälters 2. Sie verläuft parallel zur Deckelschwenkachse 10.

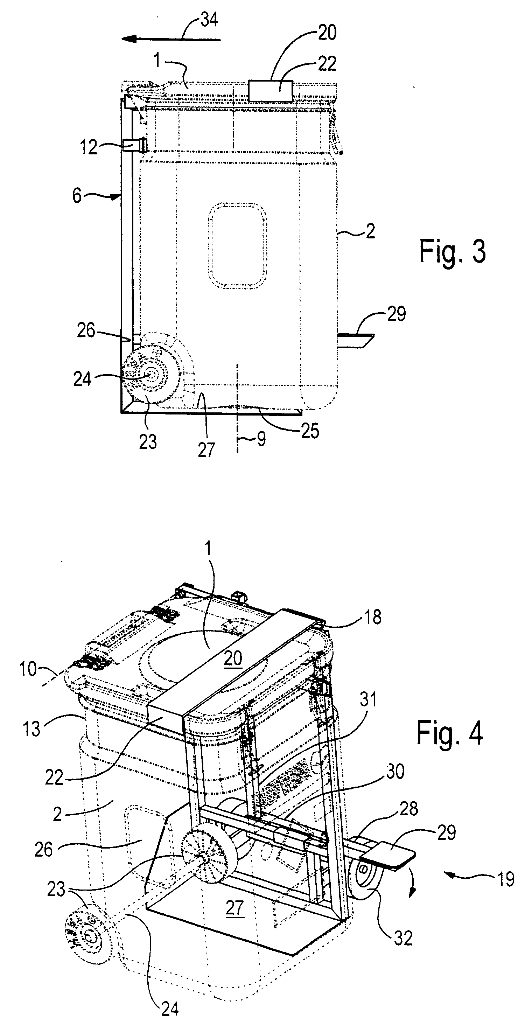

Unterhalb des Anlageansatzes 14 trägt das Stütz- oder Wandelement 6 einen in Richtung ebenfalls auf die Aufnahmeseite zum Behälter 2 vorstehenden Anlagevorsprung 26 als Rollanschlag für den Behälter 2 bzw. für mindestens ein Behälterrad 23. Es ist das das unterhalb der Deckelschwenkachse 10 befindliche, dem Aufnahmegestell 3 zugewandte Behälterrad 23, wie das besonders deutlich in Fig. 4 erkennbar ist. Der Anlagevorsprung 26 dient also gewissermaßen als Prellbock bzw. Endanschlag für die Überführungsbewegung des Behälters 2 in seine Fixierposition gegenüber dem Aufnahmegestell 3. Dazu wird der Behälter 2 auf seinen eigenen Behälterrädern 23 gerollt, was diese Zustellbewegung wesentlich erleichtert.

Weiterhin trägt das Stütz- oder Wandelement 6 einen in Richtung ebenfalls auf die Aufnahmeseite für den Behälter 2 vorstehenden Auflagevorsprung 27 für die Auflage des Behälters 2, mindestens für die Auflage des - bezogen auf die Fixierposition (Fig. 4) - inneren Behälterrades 23 des Behälters 2. Der Auflagevorsprung 27 ist am unteren Ende des Stütz- oder Wandelements 6 derart befestigt, dass der Behälter 2 mit seinem dem Stütz- oder Wandelement 6 zugewandten Behälterrad 23 auf den Auflagevorsprung 27 in Richtung auf seine Fixierstellung aufrollbar ist. Der Anlagevorsprung 26 und der Auflagevorsprung 27 sind jeweils durch mit ihren einander zugewandten Oberflächen die Anlage und die Auflage bildende Bleche realisiert. Beide Bleche stoßen in einem Winkelscheitel aneinander und bilden dadurch die Schenkel eines aus der vom Stütz- oder Wandelement 6 aufgespannten Anlageebene seitlich vorstehenden rechten Winkels. Dadurch und durch ihre Firxierverbindung am Stütz- oder Wandelement 6 sind die beiden Vorsprünge 26,27 formstabilisiert, zumal sie im Bereich des Winkelscheitels noch miteinander verschweißt sind. Das Aufnahmegestell ist aus metallischen Streben, insbesondere aus Stahlstreben, gefertigt. Daher lassen sich zu seiner Herstellung Schweißverbindungen einfach anwenden.

Die Hubeinrichtung 19 wird betätigt durch einen zweiarmigen Fußbetätigungshebel 28, welcher im Bodenbereich des Stütz- oder Wandelements 6 schwenkgelagert ist derart, dass seine Schwenkebene mit der vom Stütz- oder Wandelement 6 aufgespannten Anlagefläche bzw. -ebene übereinstimmt oder parallel zu dieser verläuft. In seiner der Verschlussstellung des Behälterdeckels 1 entsprechenden Ruhestellung ist der Fußbetätigungshebel 28 etwa horizontal ausgerichtet (Fig. 4).

Sein Fußbetätigungsarm 29 steht in Aufnahmestellung seitlich über den Behälter 2 hinaus (Fig. 3). Sein Hubbetätigungsarm 30 trägt an einem Ende eine angelenkte Hubstange 31, deren oberes Ende am Schwenköffnungshebel 17 mit Abstand von dessen Schwenkachse 18 angelenkt ist.

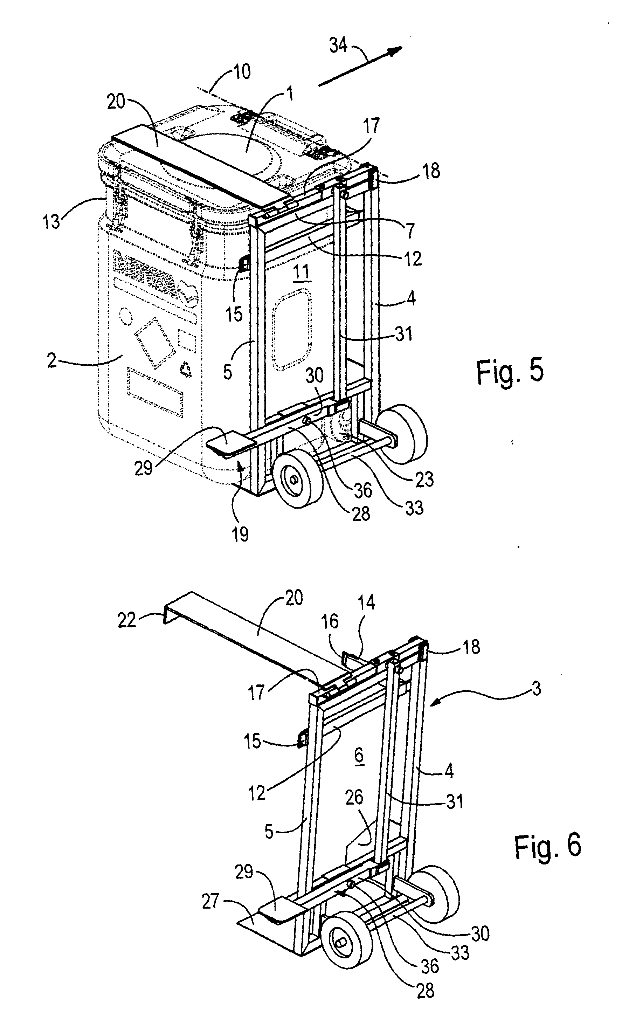

Das Aufnahmegestell 3 ist beim Ausführungsbeispiel mit eigenen Gestellrädern 32 bestückt. Diese sind im Bodenbereich des Stütz- oder Wandelements 6 mit etwa horizontalem Verlauf ihrer Gestellradachse 33 nach Art der Räder einer Sackkarre angeordnet. Sie stehen in von der Aufnahmeseite für den Behälter 2 abgewandter Richtung über das Stütz- oder Wandelement 6 vor und ihre Rotationsebenen sind dabei etwa rechtwinklig zur vom Stütz- oder Wandelement 6 aufgespannten Anlagefläche ausgerichtet. Die Gestellradachse 33 des Aufnahmegestells 3 verläuft in Aufnahmeposition rechtwinklig zur Behälterradachse 24 des aufgesattelten Behälters 2 (Fig. 4). Die Gestellräder 32 verleihen dem Aufnahmegestell 3 eine Rollbeweglichkeit ähnlich der einer Sackkarre. Sie sind dabei so positioniert, dass das Aufnahmegestell 3 zur Einleitung einer Rollbewegung nur leicht im Bezug auf Fig. 5 bis 7 und 11 im Uhrzeigersinn gekippt zu werden braucht. Mit der so erzeugten Hebelwirkung wird der Behälter 2 vom Boden abgehoben. Die Gestellräder 32 ermöglichen es dann. die komplette, von Hause aus für eine ortsfeste Aufstellung vorgesehene Aufnahmeeinrichtung wahlweise an einen Arbeitsplatz zu transportieren bzw. zum jeweiligen Arbeitsplatz mitzunehmen.

Zum Einwerfen von benutzten Maschinenputztüchern wird der Behälterdeckel 1 durch Fußbelastung des vorstehenden Fußbetätigungsarmes 29 unter Mitnahme durch die sie umgreifende Schwenklasche 20 ausreichend weit geöffnet. Der Öffnungswinkel (Fig. 11) reicht zum behinderungsfreien Einwerfen des benutzten Maschinenputztuches aus. Danach wird der Fußbetätigungsdruck vom Fußbetätigungsarm 29 genommen und das Eigengewicht des Schwenköffnungshebels 17 bzw. der an ihn angelenkten Schwenklasche 20 bewirkt selbsttätig dauerhaft ein luftdichtes Verschließen des Behälterdeckels 1.

Es ist vorgesehen, das Aufnahmegestell 3 unmittelbar an einem Arbeitsplatz zu positionieren. Dann können die Gestellräder 32 am Aufnahmegestell 3 entfallen und es ist dann eine ortsfeste Fixierung des Aufnahmegestells 3 z.B. an einer Gebäudewand oder an einer Möbelwand möglich. Die Schwenkebene und die Positionierung des Fußbetätigungsarmes 29 sind so gewählt, dass der Fußbetätigungsarm 29 keinen Raumverbrauch verursacht und vor allen Dingen nicht störend in den Aufstellraum hineinsteht. Bei Positionierung des Aufnahmegestells 3 mit der vom Stütz- oder Wandelement 6 aufgespannten Ebene oder Fläche etwa parallel zu einer Gebäudewand oder einer Möbelwand verläuft der Betätigungshebel 28 mit nur geringfügigem Abstand parallel zu dieser Wand und steht dadurch nicht störend oder möglicherweise sogar als Ursache für eine Unfallgefahr in den Bewegungsraum vor.

Die Fixierung des Behälters 2 am Aufnahmegestell 3 erfolgt bei am Schwenköffnungshebel 17 zunächst hochgeschwenkter Schwenklasche 20 (Fig. 11), indem der Behälter 2 mit in Rollrichtung 34 des Benälters 2 vornliegender Deckelschwenkachse 10 (Fig. 3 und 5) in etwa einer Anlagestellung seiner Seitenwand 11 an der vom Stütz- oder Wandelement 6 aufgespannten Anlagefläche bzw. -ebene bzw. an der Fixierstrebe 12 steht. Der Behälter 2 ist dabei auf das Auflageblech 27 so weit aufgesetzt oder aufgerollt, bis er oder sein dem Aufnahmegestell 3 zugewandtes Behälterrad 23 an den Anlagevorsprung 26 anschlägt. In dieser Position liegt der Behälter 2 mit seinem Mantel oder seinem Behälterhals 13 einerseits an der Fixierstrebe 12 an. Außerdem schlägt er an den Anlageansatz 14 als weiteren Stopp an. Sodann wird der an den Ösen 15,16 von Fixierstrebe 12 und/oder Anlageansatz 14 angelenkte Zurrgurt um den freiliegenden Teil des Behälterhalses 13 des Behälters 2 nach Art eines Fassreifens herumgelegt und festgezurrt. Dadurch ist der Behälter 2 in seine Sollposition (Aufnahme- bzw. Fixierstellung) gegenüber dem Aufnahmegestell 3 hineingezogen. Er liegt dann mit dem Behälterhals 13 fest in dem von Fixierstrebe 12 und Anlageansatz 14 gebildeten Anlagewinkel als Anschlag ein. Bei der Einführung bzw. Verbindung des Behälters 2 mit dem Aufnahmegestell 3 ist der Behälter noch leer, so dass er einfach und problemlos handhabbar ist. Seine Verzurrung zieht ihn selbsttätig in die Sollposition am Aufnahmegestell 3 hinein, soweit das noch nicht beim anfänglichen Positionieren des Behälters 2 oder bei einem Hineinrollen in eine Anlagestellung seines inneren Behälterrades 23 am Anlagevorsprung 26 sichergestellt ist.

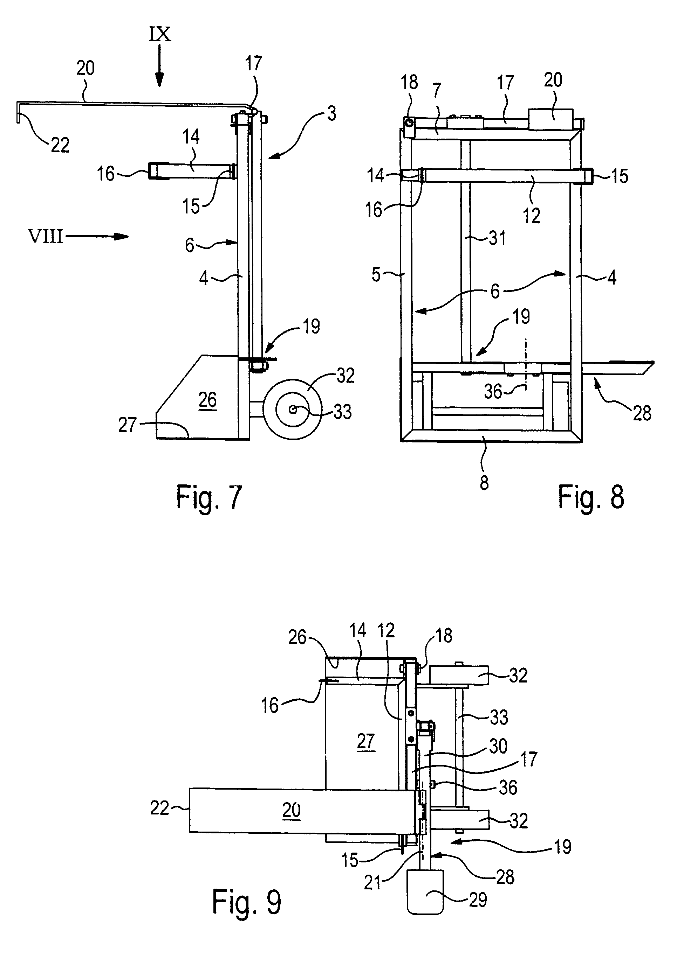

Beim Positionieren des Behälters 2 im Aufnahmegestell 3 wird die Schwenklasche 20 entgegen dem Uhrzeigersinn (Fig. 6,11) abwärts geschwenkt und sie umschließt in horizontaler Position (Fig. 4) den Behälterdeckel 1 mit ihrem Hubwinkel 22. Durch das Umgreifen seitens des Hubwinkels 22 ist sichergestellt, dass der Betätigungshebel 28 bei einer Fußbetätigung durch seine Schwenkung mit Bezug auf Fig. 4 und 8 sowie bezogen auf die Schwenklagerachse 36 des Betätigungshebels 28 im Uhrzeigersinn die Schwenklasche 20 und den von ihr umgriffenen Behälterdeckel 1 um einen zum Putztucheinwurf ausreichenden Betrag hochschwenkt.

Nach der Füllung des Behälters 2 mit verschmutzten Tüchern wird der Behälter 2 vom Aufnahmegestell 3 gelöst. Gegebenenfalls wird der Behälter 2 nach Art einer Sackkarre aus seiner Fixierposition am Aufnahmegestell 3 hinausgerollt. Dazu braucht der Behälter 2 nur um einen geringfügigen Betrag bezogen auf Fig. 3 und 4 im Gegenuhrzeigersinn um die Behälterradachse 24 gekippt zu werden. Dann ist der Behälterdeckel 1 frei vom Aufnahmegestell 3 und kann bei Bedarf wieder um einen vom Aufnahmegestell 3 unbegrenzten Öffnungswinkel vollständig geöffnet werden.

### Bezugszeichenliste

- 1: Behälterdeckel
- 2: Behälter
- 3: Aufnahmegestell
- 4: Vertikalstrebe
- 5: Vertikalstrebe
- 6: Stütz- oder Wandelement
- 7: Horizontalstrebe
- 8: Horizontalstrebe
- 9: Mittellängsachse
- 10: Deckelschwenkachse
- 11: Behälterseitenwand
- 12: Fixierstrebe
- 13: Behälterhals
- 14: Anlageansatz
- 15: Öse
- 16: Öse
- 17: Schwenköffnungshebel
- 18: Schwenkachse
- 19: Hubeinrichtung
- 20: Schwenklasche
- 21: Achse
- 22: Hubwinkel
- 23: Behälterrad
- 24: Behälterradachse
- 25: Behälterboden
- 26: Anlagevorsprung
- 27: Auflagevorsprung
- 28: Betätigungshebel
- 29: Fußbetätigungsarm
- 30: Hubbetätigungsarm
- 31: Hubstange
- 32: Gestellrad /Gestellräder
- 33: Gestellradachse
- 34: Rollrichtung
- 36: Schwenklagerachse

## Patentansprüche

1. Aufnahmeeinrichtung für verschmutzte Maschinenputztücher oder dgl. mit einem
- vorzugsweise einstückig aus Kunststoff gefertigten,
- mittels eines schwenkbar am Behälterrand angelenkten Deckels (1) vorzugsweise luftdicht verschließbaren und
- mittels eigener im Bereich des Behälterbodens (25) angeordneter Behälterräder (23) rollbeweglichen
Transport- und Lagerbehälter (2), **gekennzeichnet durch** einem für dessen Halterung bestimmten Aufnahmegestell (3), welches ein sich im Wesentlichen in vertikaler Richtung erstreckendes, zur seitlichen Standsicherung dienendes Stütz- oder Wandelement (6) enthält,
an welchem der Behälter (2) mittels einer Fixiereinrichtung lösbar in seitlicher Anlage fixiert ist und welches eine
- gegen einen permanent auf den Deckel (1) einwirkenden Schließdruck wirksame,
- **durch** Fußdruck betätigbare und
- in Fixierstellung des Behälters (2) an dessen Verschlussdeckel (1) in eine Ein-, insbesondere in eine Untergriffstellung bringbare
Hubeinrichtung (19) zum Hochschwenken des Verschlussdeckels (1) trägt.

2. Aufnahmeeinrichtung nach Anspruch 1,
**dadurch gekennzeichnet,**
**dass** das Aufnahmegestell (3) seinerseits mittels eigener Gestellräder (32) rollbeweglich ist.

3. Aufnahmeeinrichtung nach Anspruch 1 oder 2,
**dadurch gekennzeichnet,**
**dass** das Stütz- oder Wandelement (6) an einer quer, insbesondere rechtwinklig zur Deckelschwenkachse (10) verlaufenden Behälterseite (11) positioniert ist.

4. Aufnahmeeinrichtung nach einem der Ansprüche 1 bis 3,
**dadurch gekennzeichnet,**
**dass** der Behälter (2) etwa quaderförmig und der Querschnitt seines Mantels etwa quadratisch ist und dass der Behälter (2) in mit dem Aufnahmegestell (3) verbundener Aufnahmestellung mit einer Seitenwand seines Behältermantels etwa parallel zum Stütz- oder Wandelement (6) verläuft.

5. Aufnahmeeinrichtung nach einem der Ansprüche 1 bis 4,
**dadurch gekennzeichnet,**
**dass** eine Behälterradachse (24) etwa parallel zur Deckelschwenkachse (10) ausgerichtet und unterhalb der Deckelschwenkachse (10) im Bereich des Bodens des Behälters (2) an diesem positioniert ist und mindestens ein Behälterrad (23), insbesondere aber im Bereich etwa zweier einander gegenüberliegender Behälterseitenwände jeweils ein Behälterrad (23) lagert.

6. Aufnahmeeinrichtung nach einem der Ansprüche 2 bis 5,
**dadurch gekennzeichnet,**
**dass** die Behälterradachse (24) in Aufnahmestellung des Behälters (2) etwa rechtwinklig zur Gestellradachse (33) verläuft.

7. Aufnahmeeinrichtung nach einem oder mehreren der vorhergehenden Ansprüche,
**dadurch gekennzeichnet,**
**dass** das Stütz- oder Wandelement (6) als Positionierhilfe mindestens einen etwa rechtwinklig zur Gestellradachse (33) in Richtung auf die Aufnahmeseite vorstehenden Anlagevorsprung (14,26) zur positionierenden Seitenanlage des Behälters (2) und/oder eines Behälterrades (23) trägt.

8. Aufnahmeeinrichtung nach einem oder mehreren der vorhergehenden Ansprüche,
**dadurch gekennzeichnet,**
**dass** das Stütz- oder Wandelement (6) einen in Richtung auf die Aufnahmeseite vorstehenden Auflagevorsprung (27) für eine Auflage des Behälterrades (23) trägt.

9. Aufnahmeeinrichtung nach Anspruch 7 oder 8,
**dadurch gekennzeichnet,**
**dass** der Anlagevorsprung (26) und der Auflagevorsprung (27) durch jeweils ein Blech gebildet sind, deren einander zugewandte Oberflächen die Anlage- bzw. Auflagefunktion erfüllen.

10. Aufnahmeeinrichtung nacn Anspruch 9,
**dadurch gekennzeichnet,**
**dass** die beiden Bleche aneinanderstoßen, insbesondere miteinander verschweißt sind und die Schenkel eines aus der vom Stütz- oder Wandelement (6) aufgespannten Anlagefläche seitlich vorstehenden Winkels bilden.

11. Aufnahmeeinrichtung nach einem oder mehreren der vorhergehenden Ansprüche,
**dadurch gekennzeichnet,**
**dass** das Stütz- oder Wandelement (6) und/oder ein mit diesem verbundener Anlageansatz (14) mit Abstand oberhalb der Position des Behälterbodens (25) Ösen (15,16) zur Fixierung eines Spann- oder Zurrgurtes trägt, der in Fixierstellung mindestens einen Teil des Behälterhalses (13) oder Behältermantels nach Art etwa eines Fassreifens umschlingt.

12. Aufnahmeeinrichtung nach Anspruch 11,
**dadurch gekennzeichnet,**
**dass** die Ösen (15,16) an den Enden einer in der vom Wandelement aufgespannten Anlageebene etwa horizontal verlaufenden Fixierstrebe (12) und/oder eines an diese angesetzten Anlagevorsprunges (14) positioniert sind.

13. Aufnahmeeinrichtung nach einem oder mehreren der vorhergehenden Ansprüche,
**dadurch gekennzeichnet,**
**dass** ein Anlagevorsprung (14) in Höhe der Fixierstrebe (12) angeordnet ist und mit ihr gemeinsam die Schenkel eines Anlagewinkels bildet und dass die Ösen (15,16) zur Anlenkung der Enden des Spann- oder Zurrgurtes an den Schenkelenden des Anlagewinkels fixiert sind.

14. Aufnahmeeinrichtung nach einem oder mehreren der vorhergehenden Ansprüche,
**dadurch gekennzeichnet,**
**dass** das Stütz- oder Wandelement (6) einen in der von ihm aufgespannten Anlageebene oder etwa parallel dazu hochschwenkbaren Schwenköffnungshebel (17) trägt, dessen Schwenkachse (18) etwa parallel mit geringem Abstand, insbesondere etwa koaxial zur Deckelschwenkachse (10) des in Aufnahmestellung am Aufnahmegestell (3) befindlichen Behälters (2) positioniert ist, wobei der Schwenköffnungshebel (17)
- den Verschlussdeckel (1) umfasst, insbesondere untergreift und
- bei Antrieb durch eine fußbetätigbare Hubeinrichtung (19) hochschwenkt.

15. Aufnahmeeinrichtung nach einem oder mehreren der vorhergehenden Ansprüche,
**dadurch gekennzeichnet,**
**dass** der Schwenköffnungshebel (17) zur Erzeugung eines auf den Verschlussdeckel (1) einwirkenden Schließdruckes mit Abstand von seiner Schwenkachse (18) gewichtsbelastet ist.

16. Aufnahmeeinrichtung nach Anspruch 15,
**gekennzeichnet durch**
eine am Schwenköffnungshebel (17) in Richtung auf die Aufnahmeseite schwenkbar gelagerte, den Behälterdeckel (1) in Behälteraufnahmestellung über- und/oder hintergreifende Schwenklasche (20) als Schließbelastungsgewicht.

17. Aufnahmeeinrichtung nach Anspruch 16,
**dadurch gekennzeichnet,**
**dass** die Schwenklasche (20) um eine in der oder etwa parallel zur Schwenkebene des Öffnungshebels (17) verlaufende Achse (21) schwenkgelagert ist.

18. Aufnahmeeinrichtung nach einem oder mehreren der vorhergehenden Ansprüche,
**gekennzeichnet durch**
einen am Stütz- oder Wandelement (6), insbesondere in dessen Ebene schwenkgelagerten und mit dem Schwenköffnungshebel (17) antriebsmäßig verbundenen Fußbetätigungshebel (28), dessen Fußbetätigungsarm (29) in Aufnahmestellung des Behälters (2) seitlich über diesen hinaussteht.

19. Aufnahmeeinrichtung nach Anspruch 18,
**dadurch gekennzeichnet,**
**dass** der Fußbetätigungshebel (28) ein zweiarmiger Hebel ist, dessen einer Hebelarm der Fußbetätigungsarm (29) ist und dessen anderer Hubbetätigungsarm (30) an seinem Ende eine angelenkte Hubstange (31) trägt, deren oberes Ende am Öffnungshebel (17) mit Abstand von dessen Schwenkachse (18) angelenkt ist.

20. Aufnahmeeinrichtung nach einem oder mehreren der vorhergehenden Ansprüche,
**dadurch gekennzeichnet,**
**dass** das Stütz- oder Wandelement (6) durch einen eine Anlagefläche aufspannenden Gestellrahmen gebildet ist, über den der Fußbetätigungsarm (29) für den Schwenköffnungshebel (17) seitlich hinaussteht.

21. Aufnahmeeinrichtung nach einem oder mehreren der vorhergehenden Ansprüche,
**dadurch gekennzeichnet,**
**dass** die Gestellräder (32) mit etwa horizontalem Achsverlauf (33) nach Art der Räder einer Sackkarre an den Außenseiten des Aufnahmegestells (3) angeordnet sind.

22. Aufnahmeeinrichtung nach Anspruch 21,
**dadurch gekennzeichnet,**
**dass** die Gestellradachse (33) der Laufräder (32) in von der Aufnahmeseite für den Behälter (2) abgewandter Richtung über die vom Stütz- oder Wandelement (6) aufgespannte Anlagefläche vorsteht und dabei etwa parallel zur vom Wandelement (6) aufgespannten Anlageebene verläuft.

## Claims

1. Containment device for contaminated machine wipes or the like with a
transporting and storing container (2) which is
- preferably produced in one piece from plastic,
- preferably can be closed in an airtight manner by means of a lid (1) swing-mounted on the container edge and
- movable by rolling by means of its own container wheels (23) arranged in the region of the container base (25),
**characterized by** a receiving framework (3), which is intended for mounting it and includes a supporting or wall element (6) extending substantially in the vertical direction and serving for lateral stability,
to which element the container (2) is detachably fixed in lateral abutment by means of a fixing device and which bears a lifting device (19) which is
- operative against a closing pressure acting permanently on the lid (1),
- can be actuated by foot pressure and
- in the fixing position of the container (2), can be brought into an engaging position, in particular an under-engaging position, on its closure lid (1)
and is intended for swinging up the closure lid (1).

2. Containment device according to Claim 1, **characterized in that** the receiving framework (3) is for its part movable by rolling by means of its own framework wheels (32).

3. Containment device according to Claim 1 or 2, **characterized in that** the supporting or wall element (6) is positioned on a container side (11) running transversely, in particular at right angles, to the lid swing axis (10).

4. Containment device according to one of Claims 1 to 3, **characterized in that** the container (2) is approximately cuboidal and the cross section of its lateral area is approximately square and **in that**, in the receiving position in which it is connected to the receiving framework (3), the container (2) extends with one side wall of its lateral area approximately parallel to the supporting or wall element (6).

5. Containment device according to one of Claims 1 to 4, **characterized in that** a container wheel axis (24) is aligned approximately parallel to the lid swing axis (10) and is positioned underneath the lid swing axis (10) in the region of the base of the container (2) on the latter and bears at least one container wheel (23), but in particular in the region of for instance two container side walls lying opposite each other in each case a container wheel (23).

6. Containment device according to one of Claims 2 to 5, **characterized in that**, in the receiving position of the container (2), the container wheel axis (24) extends approximately at right angles to the framework wheel axis (33).

7. Containment device according to one or more of the preceding claims, **characterized in that** the supporting or wall element (6) bears as a positioning aid at least one abutment projection (14, 26), protruding approximately at right angles to the framework wheel axis (33) in the direction of the receiving side, for the positioning side abutment of the container (2) and/or of a container wheel (23).

8. Containment device according to one or more of the preceding claims, **characterized in that** the supporting or wall element (6) bears a bearing projection (27), protruding in the direction of the receiving side, for bearing the container wheel (23).

9. Containment device according to Claim 7 or 8, **characterized in that** the abutment projection (26) and the bearing projection (27) are each formed by a metal sheet, the mutually facing surfaces of which perform the abutting or bearing function.

10. Containment device according to Claim 9, **characterized in that** the two metal sheets butt against each other, in particular are welded to each other, and form the sides of an angle protruding laterally from the abutting face defined by the supporting or wall element (6).

11. Containment device according to one or more of the preceding claims, **characterized in that** the supporting or wall element (6) and/or an abutment attachment (14) connected to the latter bears at a distance above the position of the container base (25) eyelets (15, 16) for fixing a securing or lashing strap, which in the fixing position wraps around at least part of the container neck (13) or lateral area of the container somewhat in the manner of a barrel hoop.

12. Containment device according to Claim 11, **characterized in that** the eyelets (15, 16) are positioned at the ends of a fixing strut (12) extending approximately horizontally in the abutment plane defined by the wall element and/or of an abutment projection (14) attached to the said strut.

13. Containment device according to one or more of the preceding claims, **characterized in that** an abutment projection (14) is arranged at the height of the fixing strut (12) and together with it forms the sides of an abutment angle and **in that** the eyelets (15, 16) for coupling the ends of the securing or lashing strap are fixed to the ends of the sides of the abutment angle.

14. Containment device according to one or more of the preceding claims, **characterized in that** the supporting or wall element (6) bears a swing opening lever (17), which can be swung up in the abutment plane defined by the said element or approximately parallel thereto and the swing axis (18) of which is positioned approximately parallel, at a small distance, in particular approximately coaxial to the lid swing axis (10) of the container (2) located in the receiving position on the receiving frame (3), the swing opening lever (17)
- engaging around the closure lid (1), in particular under-engaging it, and
- swinging up when driven by a foot-actuated lifting device (19).

15. Containment device according to one or more of the preceding claims, **characterized in that** the swing opening lever (17) is loaded by a weight at a distance from its swing axis (18) for producing a closing pressure acting on the closure lid (1).

16. Containment device according to Claim 15, **characterized by** a swing lug (20), as a closure loading weight, which is mounted on the swing opening lever (17) in such a way that it can swing in the direction of the receiving side and engages over and/or behind the container lid (1) in the container receiving position.

17. Containment device according to Claim 16, **characterized in that** the swing lug (20) is swing-mounted about an axis (21) running in the or approximately parallel to the swing plane of the opening lever (17).

18. Containment device according to one or more of the preceding claims, **characterized by** a foot actuating lever (28), which is swing-mounted on the supporting or wall element (6), in particular the plane of the latter, is connected in drive terms to the swing opening lever (17) and the foot actuating arm (29) of which in the receiving position of the container (2) protrudes laterally beyond the latter.

19. Containment device according to Claim 18, **characterized in that** the foot actuating lever (28) is a two-armed lever, the one lever arm of which is the foot actuating arm (29) and the other lifting actuating arm (30) of which bears at its end a pivoted lifting rod (31), the upper end of which is coupled to the opening lever (17) at a distance from the swing axis (18) of the latter.

20. Containment device according to one or more of the preceding claims, **characterized in that** the supporting or wall element (6) is formed by a framework frame which defines an abutting face and beyond which the foot actuating arm (29) for the swing opening lever (17) laterally protrudes.

21. Containment device according to one or more of the preceding claims, **characterized in that** the framework wheels (32) are arranged on the outer sides of the receiving framework (3) with the axis (33) running approximately horizontally in the manner of the wheels of a barrow.

22. Containment device according to Claim 21, **characterized in that** the framework wheel axis (33) of the running wheels (32) protrudes beyond the abutting face defined by the supporting or wall element (6) in the direction away from the receiving side for the container (2) and thereby runs approximately parallel to the abutment plane defined by the wall element (6).

## Revendications

1. Dispositif de réception de chiffons encrassés de nettoyage de machines ou similaires comprenant un conteneur de transport et de stockage (2)
- fabriqué de préférence d'une seule pièce en matière plastique,
- pouvant être fermé de préférence de façon étanche à l'air au moyen d'un couvercle (1) articulé de façon basculante sur le bord du conteneur et
- mobile par roulement au moyen de roues pour conteneur (23) propres et disposées dans la zone du fond du conteneur (25),
**caractérisé par** un bâti de réception (3) destiné à son support, qui comporte un élément de soutien ou mural (6) s'étendant sensiblement dans le sens vertical et servant à la stabilité latérale d'assise,
sur lequel le conteneur (2) est fixé de façon amovible en appui latéral au moyen d'un système de fixation et qui porte un système de levage (19)
- efficace contre une pression de fermeture agissant de façon permanente sur le couvercle (1),
- pouvant être actionné par pression du pied, et
- pouvant être amené, dans la position de fixation du conteneur (2) sur son couvercle de fermeture (1), dans une position de pénétration, en particulier dans une position de saisie par dessous, pour le basculement vers le haut du couvercle de fermeture (1).

2. Dispositif de logement selon la revendication 1,
**caractérisé en ce que**
le bâti de logement (3) est mobile par roulement au moyen de roues de bâti (32) propres.

3. Dispositif de logement selon la revendication 1 ou 2,
**caractérisé en ce que**
l'élément de soutien ou l'élément mural (6) est positionné sur un côté du conteneur (11) s'étendant transversalement, en particulier à angle droit par rapport à l'axe de basculement du couvercle (10).

4. Dispositif de logement selon l'une quelconque des revendications 1 à 3,
**caractérisé en ce que**
le conteneur (2) a une forme approximative de parallélépipède et la section de sa surface latérale est à peu près carrée et **en ce que** le conteneur (2) s'étend, dans la position de logement reliée au bâti de logement (3), par une paroi latérale de sa surface latérale à peu près parallèlement à l'élément de soutien ou mural (6).

5. Dispositif de logement selon l'une quelconque des revendications 1 à 4,
**caractérisé en ce que** un axe de la roue du conteneur (24) est orienté à peu près parallèlement à l'axe de basculement du couvercle (10) et est positionné au-dessous de l'axe de basculement du couvercle (10) dans la zone du fond du conteneur (2) sur celui-ci et au moins une roue (23) du conteneur, mais respectivement une roue (23) du conteneur est montée en particulier dans la zone d'à peu prés deux parois latérales du conteneur se faisant face.

6. Dispositif de logement selon l'une quelconque des revendications 2 à 5,
**caractérisé en ce que**
l'axe de roue du conteneur (24) est à peu près perpendiculaire à l'axe de roue du bâti (33) dans la position de logement du conteneur (2).

7. Dispositif de logement selon l'une quelconque ou plusieurs des revendications précédentes,
**caractérisé en ce que**
l'élément de soutien ou mural (6) porte en tant qu'aide de positionnement au moins une saillie d'appui (14, 26) dépassant à peu prés perpendiculairement à l'axe de roue du bâti (33) en direction du côté de logement pour l'appui latéral de positionnement du conteneur (2) et/ou d'une roue du conteneur (23).

8. Dispositif de logement selon l'une quelconque ou plusieurs des revendications précédentes,
**caractérisé en ce que**
l'élément de soutien ou mural (6) porte une saillie de support (27) dépassant en direction du côté de logement pour un support de la roue du conteneur (23).

9. Dispositif de logement selon la revendication 7 ou 8,
**caractérisé en ce que**
la saillie d'appui (26) et la saillie de support (27) sont formées chacune par une tôle, dont les surfaces tournées l'une vers l' autre remplissent la fonction d'appui ou de support.

10. Dispositif de logement selon la revendication 9,
**caractérisé en ce que**
les deux tôles se touchent, en particulier sont soudées et forment les branches d'une cornière dépassant latéralement de la surface d'appui déterminée par l'élément de soutien ou mural (6).

11. Dispositif de logement selon l'une quelconque ou plusieurs des revendications précédentes,
**caractérisé en ce que**
l'élément de soutien ou mural (6) et/ou une embase d'appui (14) reliée à cet élément porte à distance au-dessus de la position du fond du conteneur (25) des oeillets (15, 16) pour l'immobilisation d'une sangle de serrage ou d'arrimage, qui s'enroule dans la position d'immobilisation autour d'au moins une partie de col du conteneur (13) ou de la surface latérale du conteneur à la façon à peu près d'un cerceau.

12. Dispositif de logement selon la revendication 11,
**caractérisé en ce que**
les oeillets (15, 16) sont positionnés sur les extrémités d'une barre de fixation (12) s'étendant à peu près horizontalement dans le plan d'appui déterminé par l'élément mural et/ou d'une saillie d'appui (14) placée sur cette barre.

13. Dispositif de logement selon l'une quelconque ou plusieurs des revendications précédentes,
**caractérisé en ce que**
une saillie d'appui (14) est disposée au niveau d'une barre de fixation (12) et forme conjointement avec elle les branches d'une cornière d'appui et **en ce que** les oeillets (15, 16) pour l'articulation des extrémités de la courroie de serrage ou d'arrimage sont fixés sur les extrémités de branche de la cornière d'appui.

14. Dispositif de logement selon l'une quelconque ou plusieurs des revendications précédentes,
**caractérisé en ce que**
l'élément de soutien ou mural (6) porte un levier d'ouverture de basculement (17) pouvant être basculé vers le haut dans le plan d'appui déterminé par cet élément ou à peu près parallèlement à ce plan, levier dont l'axe de basculement (18) est positionné à peu près parallèlement à faible distance, en particulier à peu près de façon coaxiale, par rapport à l'axe de basculement du couvercle (10) du conteneur (2) se trouvant dans la position de logement sur le bâti de logement (3), le levier d'ouverture de basculement (17)
- prenant, en particulier accrochant par en dessous, le couvercle de fermeture (1),
- le fait basculer en haut lorsqu'il est entraîné par un dispositif de levage (19) pouvant être actionné au pied.

15. Dispositif de logement selon l'une quelconque ou plusieurs des revendications précédentes,
**caractérisé en ce que**
le levier d'ouverture de basculement (17) est chargé en poids pour générer une pression de fermeture agissant sur le couvercle de fermeture (1) à distance de son axe de pivotement (18).

16. Dispositif de logement selon la revendication 15,
**caractérisé par**
une patte de basculement (20) montée sur le levier d'ouverture de basculement (17) de façon à pouvoir pivoter en direction du côté de logement et saisissant par-dessus et/ou par derrière le couvercle du conteneur (1) dans la position de logement du conteneur, en guise de poids de charge de fermeture.

17. Dispositif de logement selon la revendication 16,
**caractérisé en ce que**
la patte de basculement (20) est montée basculant autour d'un axe (21) passant dans le plan de basculement ou à peu près parallèlement au plan de basculement du levier d'ouverture (17).

18. Dispositif de logement selon l'une quelconque ou plusieurs des revendications précédentes,
**caractérisé par**
un levier d'actionnement au pied (28) monté basculant sur l'élément de soutien ou mural (6), en particulier dans son plan, et relié au niveau de l'entraînement au levier d'ouverture de basculement (17), et dont le bras d'actionnement au pied (29) dépasse latéralement du conteneur dans la position de logement du conteneur (2).

19. Dispositif de logement selon la revendication 18,
**caractérisé en ce que**
le levier de commande au pied (28) est un levier à deux bras, dont un bras est le bras de commande au pied (29) et dont l'autre bras de commande de levage (30) porte sur son extrémité une tige de levage (31) articulée, dont l'extrémité supérieure est articulée sur le levier d'ouverture (17) à distance de son axe de pivotement (18).

20. Dispositif de logement selon l'une quelconque ou plusieurs des revendications précédentes,
**caractérisé en ce que**
l'élément de soutien ou mural (6) est formé par un cadre de bâti déterminant une surface d'appui, cadre dont le bras de commande au pied (29) pour le levier d'ouverture de basculement (17) dépasse latéralement.

21. Dispositif de logement selon l'une quelconque ou plusieurs des revendications précédentes,
**caractérisé en ce que**
les roues du bâti (32) sont disposées sur les côtés extérieurs du bâti de logement (3) avec un tracé d'axe (33) à peu près horizontal à la façon des roues d'un diable.

22. Dispositif de logement selon la revendication 21,
**caractérisé en ce que**
l'axe de roue du bâti (33) des roues mobiles (32) dépasse, dans la direction opposée au côté de logement du conteneur (2), de la surface d'appui déterminée par l'élément de soutien ou mural (6) et est à peu près parallèle au plan d'appui déterminé par l'élément mural (6).
